# EUROPEAN PATENT APPLICATION

(11) **EP 4 215 396 A1**
(43) Date of publication of application: **26.07.2023**
(21) Application number: 21868232.6
(22) Date of filing: 08.07.2021
(51) Int. Cl.: B60K 17/02, B60K 17/06

(54) **FOUR-WHEEL DRIVE PURE ELECTRIC VEHICLE POWER SYSTEM**

(30) Priority: 18.09.2020 CN 202010988993
(71) Applicant: China Faw Co., Ltd., Changchun, Jilin 130011 (CN)
(72) Inventor: LIU, Jiankang, Changchun, Jilin 130011 (CN); WANG, Yan, Changchun, Jilin 130011 (CN); HUO, Yunlong, Changchun, Jilin 130011 (CN); BAI, Zhuowei, Changchun, Jilin 130011 (CN); YIN, Jiankun, Changchun, Jilin 130011 (CN); YANG, Fang, Changchun, Jilin 130011 (CN)
(74) Representative: De Clercq & Partners
(86) International application number: PCT/CN2021/105139
(87) International publication number: WO 2022/057403

(57) **Abstract**

Disclosed is a power system for a four-wheel drive battery electric vehicle, including: a first motor, a second motor, a first transmission mechanism, a second transmission mechanism, a clutch, a first reducer and a second reducer; wherein the clutch is arranged between the first motor and the first transmission mechanism, wherein the first motor is arranged on a front axle; or the clutch is arranged between the first transmission mechanism and the first reducer; or the clutch is arranged between the second motor and the second transmission mechanism, wherein the second motor is arranged on a rear axle; or the clutch is arranged between the second transmission mechanism and the second reducer.

## Description

### Cross-Reference to Related Application(s)

The present invention claims priority to Chinese patent application no. 202010988993.3, filed to the China National Intellectual Property Administration on September 18, 2020, the invention of which is hereby incorporated by reference in its entirety.

### Technical Field

Embodiments of the present invention relate to vehicle technology, for example, to a power system for a four-wheel drive battery electric vehicle.

### Background

Battery electric vehicles are developing faster and faster. In order to pursue better power performance, vehicles of many models adopt a four-wheel drive solution, that is, a set of electric drive system is used at the front and the rear, respectively. Due to large power density and high efficiency, permanent magnet synchronous motors have currently been widely used in battery electric vehicles. However, different from asynchronous motors, the permanent magnet synchronous motors have a large reverse-drive torque under a rotation follow-up working condition, and in order to prevent a too high counter electromotive force, a weak magnetic current thereof in a high rotational speed section is large, and large electric energy is consumed, which all lead to high power consumption and short endurance mileage of four-wheel drive vehicles using permanent magnet synchronous motors, thereby affecting the competitiveness of the vehicle model.

### Summary

Embodiments of the present invention provide a power system for a four-wheel drive battery electric vehicle, which can reduce the loss of rotation follow-up of a motor, such that the vehicle has a lower resistance when driven, a lower power consumption and a longer endurance mileage.

In a first aspect, embodiments of the present invention provide a power system for a four-wheel drive battery electric vehicle, including: a first motor, a second motor, a first transmission mechanism, a second transmission mechanism, a clutch, a first reducer and a second reducer;
wherein the clutch is arranged between the first motor and the first transmission mechanism, wherein the first motor is arranged on a front axle;
   or
the clutch is arranged between the first transmission mechanism and the first reducer;
   or
the clutch is arranged between the second motor and the second transmission mechanism, wherein the second motor is arranged on a rear axle;
   or
the clutch is arranged between the second transmission mechanism and the second reducer.

### Brief Description of the Drawings

Hereinafter, accompanying drawings requiring to be used in the embodiments are introduced briefly. It should be understood that the following accompanying drawings only illustrate certain embodiments of the present invention, and therefore shall not be considered as limiting the scope. For a person of ordinary skill in the art, other related accompanying drawings may also be obtained according to these accompany drawings without any inventive effort.

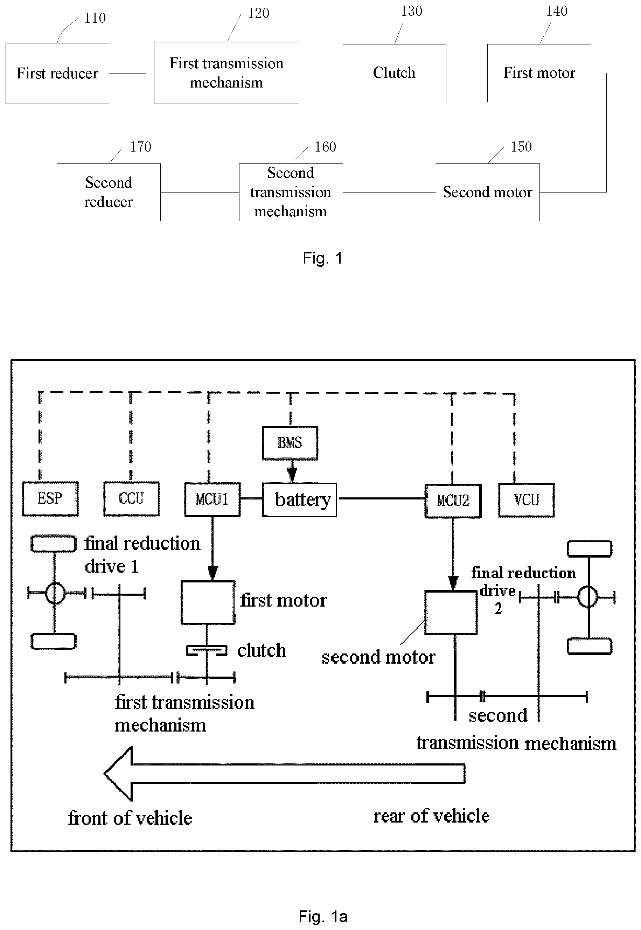

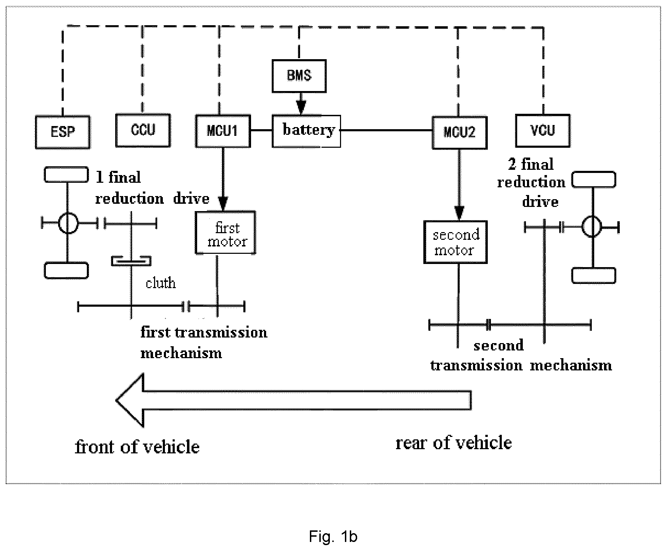

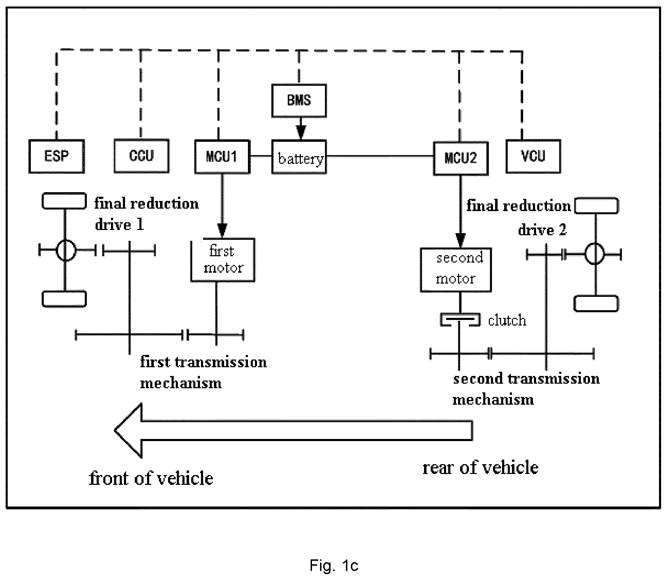

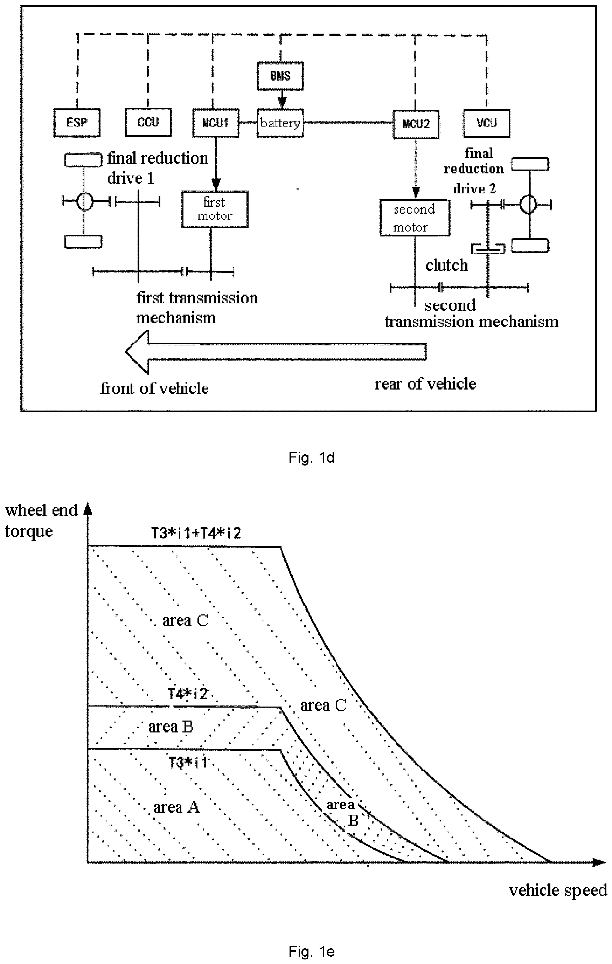

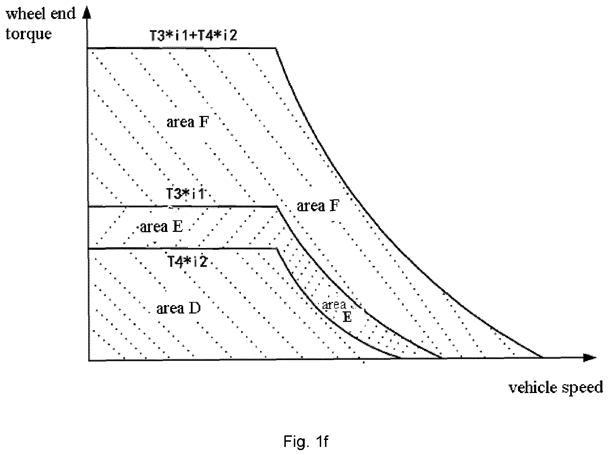

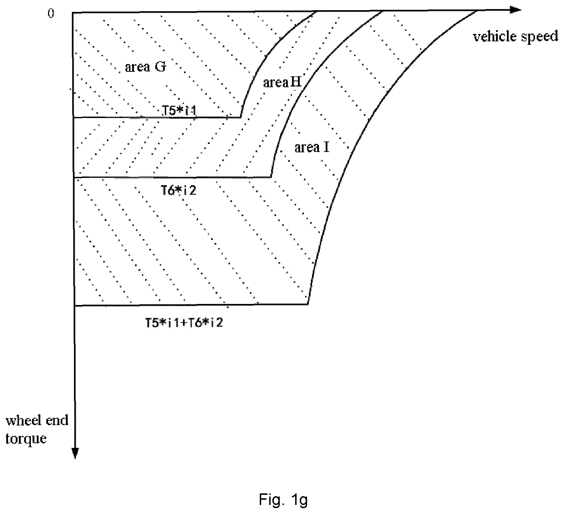

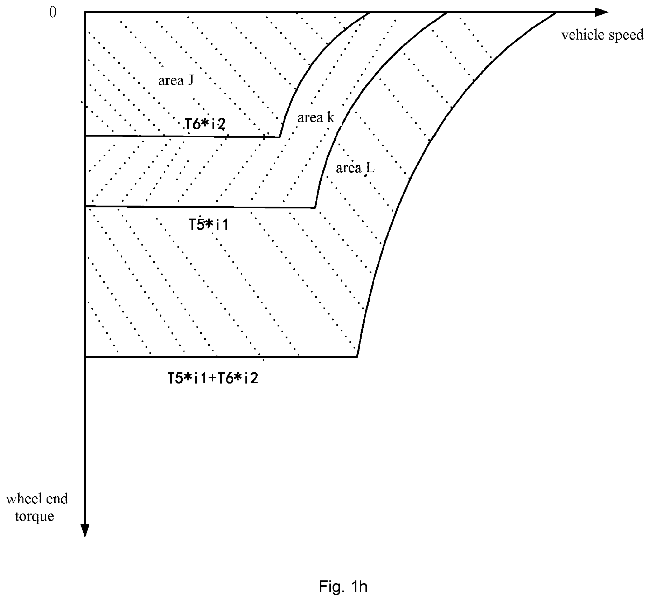

Fig. 1 is a schematic structural diagram of a power system for a four-wheel drive battery electric vehicle in Embodiment I of the present invention;
Fig. 1a is a schematic structural diagram of a power system for a four-wheel drive battery electric vehicle in which a clutch is arranged between a first motor and a first transmission mechanism in Embodiment I of the present invention;
Fig. 1b is a schematic structural diagram of a power system for a four-wheel drive battery electric vehicle in which a clutch is arranged between a first transmission mechanism and a first reducer in Embodiment I of the present invention;
Fig. 1c is a schematic structural diagram of a power system for a four-wheel drive battery electric vehicle in which a clutch is arranged between a second motor and a second transmission mechanism in Embodiment I of the present invention;
Fig. 1d is a schematic structural diagram of a power system for a four-wheel drive battery electric vehicle in which a clutch is arranged between a second transmission mechanism and a second reducer in Embodiment I of the present invention;
Fig. 1e is a diagram of the relationship between wheel end torque and vehicle speed during one drive control in Embodiment I of the present invention;
Fig. 1f is a diagram of the relationship between wheel end torque and vehicle speed during another drive control in Embodiment I of the present invention;
Fig. 1g is a diagram of the relationship between wheel end torque and vehicle speed during one brake control in Embodiment I of the present invention; and
Fig. 1h is a diagram of the relationship between wheel end torque and vehicle speed during another brake control in Embodiment I of the present invention.

### Detailed Description of the Embodiments

The present invention will be further described in detail with reference to the accompanying drawings and embodiments. It should be understood that specific embodiments described herein are merely used to explain the present invention rather than limit the present invention. In addition, it should also be noted that for ease of description, the accompanying drawings only show some but not all structures related to the present invention.

It should be noted that similar numerals and letters represent similar items in the following accompanying drawings, and thus once a certain item is defined in one accompanying drawing, it need not be further defined and explained in subsequent accompanying drawings. Moreover, in the description of the present invention, the terms "first", "second", etc. are only used for distinguishing the description, and cannot be understood as indicating or implying relative importance.

### Embodiment I

Fig. 1 is a power system for a four-wheel drive battery electric vehicle provided in Embodiment I of the present invention, the power system includes: a first reducer 110, a first transmission mechanism 120, a clutch 130, a first motor 140, a second motor 150, a second transmission mechanism 160, and a second reducer 170;
wherein the clutch 130 is arranged between the first motor 150 and the first transmission mechanism 120, wherein the first motor 150 is arranged on a front axle;
or the clutch is arranged between the first transmission mechanism and the first reducer;
or the clutch is arranged between the second motor and the second transmission mechanism, wherein the second motor is arranged on a rear axle;
or the clutch is arranged between the second transmission mechanism and the second reducer.

In some embodiments, the clutch is a one-way clutch or a two-way clutch.

In some embodiments, the power system further includes: a first motor control unit, a second motor control unit and a vehicle control unit.

If the clutch is arranged on the front axle and the clutch is a two-way clutch, the first motor control unit reports a first torque according to the state of the first motor, and the second motor control unit reports a second torque according to the state of the second motor;
when the pressure on a brake master cylinder is zero and the opening degree of an accelerator pedal is zero, the vehicle control unit determines a target wheel end electric creep torque according to a current vehicle speed and a target electric creep vehicle speed;
when the first torque is less than or equal to the second torque, if the target wheel end electric creep torque is less than or equal to the first torque, the first motor outputs the target wheel end electric creep torque to drive the vehicle to travel, the second motor rotates along therewith, and the clutch is in an engaged state; if the first torque is less than the target wheel end electric creep torque, and the target wheel end electric creep torque is less than or equal to the second torque, the second motor outputs the target wheel end electric creep torque to drive the vehicle to travel, and the first motor rotates along therewith; and if the second torque is less than the target wheel end electric creep torque, the second motor outputs the second torque, the first motor outputs a first differential torque, the first differential torque being a differential torque between the target wheel end electric creep torque and the second torque, and the clutch is in an engaged state;
when the first torque is greater than the second torque, if the target wheel end electric creep torque is less than or equal to the second torque, the second motor outputs the target wheel end electric creep torque to drive the vehicle to travel, and the first motor rotates along therewith, and the clutch is in an engaged state; if the second torque is less than the target wheel end electric creep torque, and the target wheel end electric creep torque is less than or equal to the first torque, the first motor outputs the target wheel end electric creep torque to drive the vehicle to travel, and the second motor rotates along therewith, and the clutch is in an engaged state; and if the first torque is less than the target wheel end electric creep torque, the first motor outputs the first torque and acquires a second differential torque between the target wheel end electric creep torque and the first torque, and the second motor outputs the second differential torque; wherein the first torque is a current maximum available torque of the first motor, and the second torque is a current maximum available torque of the second motor.

In some embodiments, the power system further includes:
when the vehicle is driven to travel, the vehicle control unit calculates a wheel end-required driver torque according to an accelerator pedal opening degree, a brake pedal state and a vehicle speed signal; and
the first motor control unit reports a third torque according to the state of the first motor, and the second motor control unit reports a fourth torque according to the state of the second motor;
when the wheel end-required driver torque is less than or equal to the fourth torque, the second motor outputs the wheel end-required driver torque, and changes the clutch from an engaged state to a disengaged state, the first motor is in a static state, and the first motor does not output a torque; and
when the fourth torque is less than the wheel end-required driver torque and the wheel end-required driver torque is less than or equal to a sum of the third torque and the fourth torque, a first target torque is calculated according to the wheel end-required driver torque, a front torque distribution coefficient, and a product of the speed ratio of the first transmission mechanism and the speed ratio of a first final reduction drive, and the first motor outputs the first target torque; and a second target torque is calculated according to the wheel end-required driver torque, a rear torque distribution coefficient, and a product of the speed ratio of the second transmission mechanism and the speed ratio of a second final reduction drive, and the second motor outputs the second target torque, and the clutch is in an engaged state; wherein the third torque is a current maximum available torque of the first motor, and the fourth torque is a current maximum available torque of the second motor.

In some embodiments, the power system further includes:
the vehicle control unit calculates a wheel end-required braking torque according to the magnitude of a driver brake master cylinder pressure and an accelerator pedal state;
the first motor control unit reports a fifth torque according to the state of the first motor, and the second motor control unit reports a sixth torque according to the state of the second motor;
when the wheel end-required braking torque is less than or equal to the sixth torque, the second motor outputs a third target torque, the third target torque being a ratio of the wheel end-required braking torque to a second speed ratio product, the second speed ratio product being a product of the speed ratio of the second transmission mechanism and the speed ratio of the second final reduction drive, the clutch is in a disengaged state, the first motor is in a non-operating state, and the first motor does not rotate along therewith;
when the sixth torque is less than the wheel end-required braking torque, and the wheel end-required braking torque is less than or equal to a sum of the fifth torque and the sixth torque, the second motor outputs the sixth torque, and acquires a third differential torque between the wheel end-required braking torque and the sixth torque, the first motor outputs a fourth target torque, the fourth target torque being a ratio of the third differential torque to a first speed ratio product, the first speed ratio product being a product of the speed ratio of the first transmission mechanism and the speed ratio of the first final reduction drive, and the clutch is in an engaged state; and
when the wheel end-required braking torque is greater than a sum of the fifth torque and the sixth torque, the clutch is in an engaged state, neither the first motor nor the second motor generates a torque, and both the first motor and the second motor are in a rotation follow-up state, wherein the fifth torque is a current maximum available torque of the first motor, and the sixth torque is a current maximum available torque of the second motor.

In some embodiments, the power system further includes: a first motor control unit, a second motor control unit and a vehicle control unit;
if the clutch is arranged on the front axle and the clutch is a one-way clutch, the first motor control unit reports a seventh torque according to the state of the first motor, and the second motor control unit reports an eighth torque according to the state of the second motor;
when the pressure on a brake master cylinder is zero and the opening degree of an accelerator pedal is zero, the vehicle control unit determines a target wheel end electric creep torque according to a current vehicle speed and a target electric creep vehicle speed;
when the seventh torque is less than or equal to the eighth torque, if the target wheel end electric creep torque is less than or equal to the seventh torque, the first motor outputs the target wheel end electric creep torque to drive the vehicle to travel, and the second motor rotates along therewith; when the seventh torque is less than the target wheel end electric creep torque, and the target wheel end electric creep torque is less than or equal to the eighth torque, the second motor outputs the target wheel end electric creep torque to drive the vehicle to travel, and the first motor rotates along therewith; if the eighth torque is less than the target wheel end electric creep torque, the second motor outputs the eighth torque, and the first motor outputs a fourth differential torque, the fourth differential torque being a differential torque between a target motor torque and the eighth torque;
when the seventh torque is greater than the eighth torque, if the target wheel end electric creep torque is less than or equal to the eighth torque, the second motor outputs the target wheel end electric creep torque to drive the vehicle to travel, and the first motor rotates along therewith; when the eighth torque is less than the target wheel end electric creep torque, and the target wheel end electric creep torque is less than or equal to the seventh torque, the first motor outputs the target wheel end electric creep torque to drive the vehicle to travel, and the second motor rotates along therewith; if the seventh torque is less than the target wheel end electric creep torque, the first motor outputs the seventh torque and acquires a fifth differential torque between the target wheel end electric creep torque and the seventh torque, and the second motor outputs the fifth differential torque, wherein the seventh torque is a current maximum available torque of the first motor, and the eighth torque is a current maximum available torque of the second motor.

In some embodiments, the power system further includes:
when the vehicle is driven to travel, the vehicle control unit calculates a wheel end-required driver torque according to an accelerator pedal opening degree, a brake pedal state and a vehicle speed signal;
the first motor control unit reports a ninth torque according to the state of the first motor, and the second motor control unit reports a tenth torque according to the state of the second motor;
when the wheel end-required driver torque is less than or equal to the tenth torque, the second motor outputs the wheel end-required driver torque, the first motor is in a static state, and the first motor does not output a torque;
when the tenth torque is less than the wheel end-required driver torque and the wheel end-required driver torque is less than or equal to a sum of the ninth torque and the tenth torque, a first target torque is calculated according to the wheel end-required driver torque, a front torque distribution coefficient, and a product of the speed ratio of the first transmission mechanism and the speed ratio of the first final reduction drive, the first motor outputs the first target torque; and a second target torque is calculated according to the wheel end-required driver torque, a rear torque distribution coefficient, and a product of the speed ratio of the first transmission mechanism and the speed ratio of the first final reduction drive, and the second motor outputs the second target torque, wherein the ninth torque is a current maximum available torque of the first motor, and the tenth torque is a current maximum available torque of the second motor.

In some embodiments, the power system further includes:
the vehicle control unit calculates a wheel end-required braking torque according to the magnitude of a driver brake master cylinder pressure and an accelerator pedal state;
the first motor control unit reports an eleventh torque according to the state of the first motor, and the second motor control unit reports a twelfth torque according to the state of the second motor;
when the wheel end-required braking torque is less than or equal to the twelfth torque, the second motor outputs a third target torque, the third target torque being a ratio of the wheel end-required braking torque to a second speed ratio product, the second speed ratio product being a product of the speed ratio of the second transmission mechanism and the speed ratio of the second final reduction drive;
when the twelfth torque is less than the wheel end-required braking torque, and the wheel end-required braking torque is less than or equal to a sum of the eleventh torque and the twelfth torque, the second motor outputs the twelfth torque, the first motor does not operate and does not rotate along therewith, and acquires a sixth differential torque between the wheel end-required braking torque and the twelfth torque, and a mechanical hydraulic braking system outputs the sixth differential torque;
when the wheel end-required braking torque is greater than a sum of the eleventh torque and the twelfth torque, the first motor and the second motor are in a rotation follow-up state, wherein the eleventh torque is a current maximum available torque of the first motor, and the twelfth torque is a current maximum available torque of the second motor.

In some embodiments, the power system further includes: a first motor control unit, a second motor control unit and a vehicle control unit;
if the clutch is arranged on the rear axle and the clutch is a two-way clutch, the first motor control unit reports a thirteenth torque according to the state of the first motor, and the second motor control unit reports a fourteenth torque according to the state of the second motor;
when the pressure on a brake master cylinder is zero and the opening degree of an accelerator pedal is zero, the vehicle control unit determines a target wheel end electric creep torque according to a current vehicle speed and a target electric creep vehicle speed;
when the thirteenth torque is less than or equal to the fourteenth torque, if the target wheel end electric creep torque is less than or equal to the thirteenth torque, the first motor outputs the target wheel end electric creep torque to drive the vehicle to travel, the second motor rotates along therewith, and the clutch is in an engaged state; if the thirteenth torque is less than the target wheel end electric creep torque, and the target wheel end electric creep torque is less than or equal to the fourteenth torque, the second motor outputs the target wheel end electric creep torque to drive the vehicle to travel, and the first motor rotates along therewith; and if the fourteenth torque is less than the target wheel end electric creep torque, the second motor outputs the fourteenth torque, the first motor outputs a seventh differential torque, the seventh differential torque being a differential torque between the target wheel end electric creep torque and the fourteenth torque, and the clutch is in an engaged state;
when the thirteenth torque is greater than the fourteenth torque, if the target wheel end electric creep torque is less than or equal to the fourteenth torque, the second motor outputs the target wheel end electric creep torque to drive the vehicle to travel, the first motor rotates along therewith, and the clutch is in an engaged state; if the fourteenth torque is less than the target wheel end electric creep torque, and the target wheel end electric creep torque is less than or equal to the thirteenth torque, the first motor outputs the target wheel end electric creep torque to drive the vehicle to travel, the second motor rotates along therewith, and the clutch is in an engaged state; and if the thirteenth torque is less than the target wheel end electric creep torque, the first motor outputs the thirteenth torque and acquires an eighth differential torque between the target wheel end electric creep torque and the thirteenth torque, and the second motor outputs the eighth differential torque; wherein the thirteenth torque is a current maximum available torque of the first motor, and the fourteenth torque is a current maximum available torque of the second motor;
when the vehicle is driven to travel, the vehicle control unit calculates a wheel end-required driver torque according to an accelerator pedal opening degree, a brake pedal state and a vehicle speed signal;
the first motor control unit reports a fifteenth torque according to the state of the first motor, and the second motor control unit reports a sixteenth torque according to the state of the second motor;
when the wheel end-required driver torque is less than or equal to the fifteenth torque, the first motor outputs the wheel end-required driver torque, and switches the clutch from an engaged state to a disengaged state, the second motor is in a static state, and the second motor does not output a torque;
when the fifteenth torque is less than the wheel end-required driver torque and the wheel end-required driver torque is less than or equal to a sum of the fifteenth torque and the sixteenth torque, a first target torque is calculated according to the wheel end-required driver torque, a front torque distribution coefficient, and a product of the speed ratio of the first transmission mechanism and the speed ratio of a first final reduction drive, and the first motor outputs the first target torque; and a second target torque is calculated according to the wheel end-required driver torque, a rear torque distribution coefficient, and a product of the speed ratio of the second transmission mechanism and the speed ratio of a second final reduction drive, and the second motor outputs the second target torque, and the clutch is in an engaged state; wherein the fifteenth torque is a current maximum available torque of the first motor, and the sixteenth torque is a current maximum available torque of the second motor;
the vehicle control unit calculates a wheel end-required braking torque according to the magnitude of a driver brake master cylinder pressure and an accelerator pedal state;
the first motor control unit reports a seventeenth torque according to the state of the first motor, and the second motor control unit reports an eighteenth torque according to the state of the second motor;
when the wheel end-required braking torque is less than or equal to the seventeenth torque, the first motor outputs a fifth target torque, the fifth target torque being a ratio of the wheel end-required braking torque to a first speed ratio product, the first speed ratio product being a product of the speed ratio of the first transmission mechanism and the speed ratio of the first final reduction drive, and the clutch is in a disengaged state, the second motor is in a non-operating state, and the second motor does not rotate along therewith;
when the seventeenth torque is less than the wheel end-required braking torque, and the wheel end-required braking torque is less than or equal to a sum of the seventeenth torque and the eighteenth torque, the first motor outputs the seventeenth torque, and acquires a ninth differential torque between the wheel end-required braking torque and the seventeenth torque, the second motor outputs a fifth target torque, the fifth target torque being a ratio of the ninth differential torque to a first speed ratio product, the first speed ratio product being a product of the speed ratio of the first transmission mechanism and the speed ratio of the first final reduction drive, and the clutch is in an engaged state; and
when the wheel end-required braking torque is greater than a sum of the seventeenth torque and the eighteenth torque, the clutch is in an engaged state, neither the first motor nor the second motor generates a torque, and both the first motor and the second motor are in a rotation follow-up state, wherein the seventeenth torque is a current maximum available torque of the first motor, and the eighteenth torque is a current maximum available torque of the second motor.

In some embodiments, the power system further includes: a first motor control unit, a second motor control unit and a vehicle control unit;
if the clutch is arranged on the rear axle and the clutch is a one-way clutch, the first motor control unit reports a nineteenth torque according to the state of the first motor, and the second motor control unit reports a twentieth torque according to the state of the second motor;
when the pressure on a brake master cylinder is zero and the opening degree of an accelerator pedal is zero, the vehicle control unit determines a target wheel end electric creep torque according to a current vehicle speed and a target electric creep vehicle speed;
when the nineteenth torque is less than or equal to the twentieth torque, if the target wheel end electric creep torque is less than or equal to the nineteenth torque, the first motor outputs the target wheel end electric creep torque to drive the vehicle to travel, and the second motor rotates along therewith; when the nineteenth torque is less than the target wheel end electric creep torque, and the target wheel end electric creep torque is less than or equal to the twentieth torque, the second motor outputs the target wheel end electric creep torque to drive the vehicle to travel, and the first motor rotates along therewith; if the eighth torque is less than the target wheel end electric creep torque, the second motor outputs the twentieth torque, and the first motor outputs a tenth differential torque, the tenth differential torque being a differential torque between a target motor torque and the twentieth torque;
when the nineteenth torque is greater than the twentieth torque, if the target wheel end electric creep torque is less than or equal to the twentieth torque, the second motor outputs the target wheel end electric creep torque to drive the vehicle to travel, and the first motor rotates along therewith; when the twentieth torque is less than the target wheel end electric creep torque, and the target wheel end electric creep torque is less than or equal to the nineteenth torque, the first motor outputs the target wheel end electric creep torque to drive the vehicle to travel, and the second motor rotates along therewith; if the seventh torque is less than the target wheel end electric creep torque, the first motor outputs the nineteenth torque and acquires an eleventh differential torque between the target wheel end electric creep torque and the nineteenth torque, and the second motor outputs the eleventh differential torque; wherein the nineteenth torque is a current maximum available torque of the first motor, and the twentieth torque is a current maximum available torque of the second motor;
when the vehicle is driven to travel, the vehicle control unit calculates a wheel end-required driver torque according to an accelerator pedal opening degree, a brake pedal state and a vehicle speed signal;
the first motor control unit reports a twenty-first torque according to the state of the first motor, and the second motor control unit reports a twenty-second torque according to the state of the second motor;
when the wheel end-required driver torque is less than or equal to the twenty-first torque, the first motor outputs the wheel end-required driver torque, the second motor is in a static state, and the second motor does not output a torque;
when the twenty-second torque is less than the wheel end-required driver torque and the wheel end-required driver torque is less than or equal to a sum of the twenty-first torque and the twenty-second torque, a first target torque is calculated according to the wheel end-required driver torque, a front torque distribution coefficient, and a product of the speed ratio of the first transmission mechanism and the speed ratio of the first final reduction drive, the first motor outputs the first target torque; and a second target torque is calculated according to the wheel end-required driver torque, a rear torque distribution coefficient, and a product of the speed ratio of the first transmission mechanism and the speed ratio of the first final reduction drive, and the second motor outputs the second target torque, wherein the twenty-first torque is a current maximum available torque of the first motor, and the twenty-second torque is a current maximum available torque of the second motor;
the vehicle control unit calculates a wheel end-required braking torque according to the magnitude of a driver brake master cylinder pressure and an accelerator pedal state;
the first motor control unit reports a twenty-third torque according to the state of the first motor, and the second motor control unit reports a twenty-fourth torque according to the state of the second motor;
when the wheel end-required braking torque is less than or equal to the twenty-third torque, the first motor outputs a fifth target torque, the fifth target torque being a ratio of the wheel end-required braking torque to a first speed ratio product, the first speed ratio product being a product of the speed ratio of the first transmission mechanism and the speed ratio of the first final reduction drive, and the second motor neither operates nor rotates along therewith;
when the twenty-third torque is less than the wheel end-required braking torque, and the wheel end-required braking torque is less than or equal to a sum of the twenty-third torque and the twenty-fourth torque, the first motor outputs the twenty-third torque, the second motor neither operates nor rotates along therewith, and acquires a twelfth differential torque between the wheel end-required braking torque and the twenty-third torque, and a conventional mechanical hydraulic braking system outputs the twelfth differential torque;
when the wheel end-required braking torque is greater than a sum of the twenty-third torque and the twenty-fourth torque, the first motor and the second motor are in a rotation follow-up state, wherein the twenty-third torque is a current maximum available torque of the first motor, and the twenty-fourth torque is a current maximum available torque of the second motor.

It should be noted that the first torque, the second torque, the third torque, the fourth torque, the fifth torque, the sixth torque, the seventh torque, the eighth torque, the ninth torque, the tenth torque, the eleventh torque, the twelfth torque, the thirteenth torque, the fourteenth torque, the fifteenth torque, the sixteenth torque, the seventeenth torque, the eighteenth torque, the nineteenth torque, the twentieth torque, the twenty-first torque, the twenty-second torque, the twenty-third torque and the twenty-fourth torque may be the same and may also be different, and the torques are maximum torques which can be generated by a wheel end in corresponding scenarios.

The first target torque, the second target torque, the third target torque, the fourth target torque, and the fifth target torque may be the same and may also be different.

The first differential torque, the second differential torque, the third differential torque, the fourth differential torque, the fifth differential torque, the sixth differential torque, the seventh differential torque, the eighth differential torque, the ninth differential torque, the tenth differential torque, the eleventh differential torque, and the twelfth differential torque may be the same and may also be different.

In an example, a power system for a four-wheel drive battery electric vehicle mainly includes a first motor, a second motor, a first transmission mechanism, a second transmission mechanism, a clutch, a vehicle control unit (VCU), a first motor control unit (MCU1), a second motor control unit (MCU2), a battery management system (BMS), and a clutch control unit (CCU).

The BMS sends, to the VCU, information such as SOC of battery, battery charge/discharge allowable power, battery temperature and failure state; the MCU1 sends, to the VCU, the torque, rotational speed, power, temperature and failure state of the first motor; the MCU2 sends, to the VCU, the torque, rotational speed, power, temperature and failure state of the second motor; an ESP (Electronic Stability Program) sends, to the VCU, signals such as the acceleration and vehicle speed of the vehicle; and the CCU sends the state of the clutch to the VCU. The VCU sends a control instruction of the clutch to the CCU, the CCU controls an actuator of the clutch to execute the control instruction, the VCU sends control commands of torques and rotational speeds of motors to the MCU1 and the MCU2, and the MCU1 and the MCU2 execute the control instructions to control the first motor and the second motor to operate according to the instructions.

There are four positions where the clutch is arranged: as shown in Fig. 1a, the clutch is arranged between the first motor and the first transmission mechanism; as shown in Fig. 1b, the clutch is arranged between the first transmission mechanism and a final reduction drive 1; as shown in Fig. 1c, the clutch is arranged between the second motor and the second transmission mechanism; and as shown in Fig. 1d, the clutch is arranged between the second transmission mechanism and a final reduction drive 2.

Regardless of the position of the clutch, the type of the clutch may be a two-way clutch or a one-way clutch.

The one-way clutch has only one default state, and does not have two states, i.e. engaged or disengaged, and does not need to be controlled by a controller. The one-way clutch can only transmit power from one direction to another direction, and cannot transmit power in an opposite direction. As shown in Fig. 1a or Fig. 1b, an example is used for description: if the clutch is a one-way clutch, the driving force of the first motor is transmitted to the first transmission mechanism through the clutch, that is, the first motor can drive the vehicle to travel in a forward direction, but cannot drive the vehicle to reverse in an opposite direction; and during the vehicle is travelling forward, when deceleration is needed in a brake working condition, due to the unidirectionality of force transmission of the one-way clutch, the first motor will not generate a resistance to hinder the forward movement of the vehicle, and likewise, the first motor also cannot achieve a braking energy recovery function (braking energy recovery function: braking the vehicle by controlling the first motor to generate power to generate a negative torque, and the electric energy is fed back and stored in a power battery).

The two-way clutch has three states: disengaged, engaged, and slipping. These three states can all be controlled by the CCU. When the state thereof is a disengaged state, the components at two ends of the clutch cannot perform power transmission; when the state thereof is an engaged state, the components at two ends of the clutch can normally transmit power; and when the state thereof is a slipping state, the clutch can transmit a part of power. The following example is used for description: as shown in Fig. 1a, if the clutch is a two-way clutch, when the clutch is engaged, the first motor is able to transmit a driving force to the first transmission mechanism, so that the power is transmitted to the final reduction drive to drive the vehicle to travel; and during braking of the vehicle, the first motor can also be controlled to generate power to generate a negative torque to brake the vehicle, thereby achieving a braking energy recovery function. When the clutch is disengaged, the first motor cannot drive the vehicle and cannot perform braking recovery, and the first motor also does not generate a resistance on the vehicle.

The first transmission mechanism is one or two pairs of gear transmission mechanisms, and may also be a mechanical transmission mechanism such as a chain; and the second transmission mechanism is one or two pairs of gear transmission mechanisms, and may also be a mechanical transmission mechanism such as a chain.

The first motor and the second motor are both permanent magnet synchronous motors.

The present invention further provides a control method based on the described power system, which may be as follows. For combinations of clutch arrangement position and clutch type, there are four control methods, which are respectively:
combination 1: the clutch is arranged on the front axle (as shown in Fig. 1a or Fig. 1b), and the clutch is a two-way clutch;
combination 2: the clutch is arranged on the front axle (as shown in Fig. 1a or Fig. 1b), and the clutch is a one-way clutch;
combination 3: the clutch is arranged on the rear axle (as shown in Fig. 1c or Fig. 1d), and the clutch is a two-way clutch; and
combination 4: the clutch is arranged on the rear axle (as shown in Fig. 1c or Fig. 1d), and the clutch is a one-way clutch.
   (I) With regard to combination 1: the clutch is arranged on the front axle (as shown in Fig. 1a or Fig. 1b), and the clutch is a two-way clutch, a control method thereof is as follows:
      drive start control:
      at this time, the MCU1 reports a maximum available torque T1 of the first motor according to the state of the first motor, and the maximum torque, which can be generated by the first motor, on the wheel end is T1*i1, i1 being a product of the speed ratio of the first transmission mechanism and the speed ratio of the first final reduction drive; and at this time, the MCU2 reports a maximum available torque T2 of the second motor according to the state of the second motor, and the maximum torque, which can be generated by the second motor, on the wheel end is T2*i2, i2 being a product of the speed ratio of the second transmission mechanism and the speed ratio of the second final reduction drive; and
      the default state of the clutch is an engaged state, and when the vehicle starts, the torques of the motors are controlled according to the opening degrees of the accelerator pedal and the brake pedal, and the vehicle speed. When a driver releases the brake pedal while not pressing the accelerator pedal, the VCU performs PTD control according to the current vehicle speed and a target electric creep vehicle speed, and outputs a target wheel end electric creep torque T_creep.

The electric creep vehicle speed is 3 km/h to 7 km/h.

When T1*i1≤T2*i2:
if T_creep≤T1*i1, the first motor outputs the target wheel end electric creep torque to drive the vehicle to travel, the second motor rotates along therewith and does not output a torque instruction, and the clutch maintains the default engaged state; if T1*i1<T_creep≤T2*i2, the second motor outputs the target wheel end electric creep torque to drive the vehicle to travel, the first motor rotates along therewith and does not output a torque instruction, and the clutch maintains the default engaged state; and if T2*i2<T_creep, the second motor outputs the maximum torque, the first motor outputs a difference value between the target wheel end electric creep torque and the maximum torque of the second motor, and the clutch maintains the default engaged state.

When T1*i1>T2*i2: if T_creep≤T2*i2, the second motor outputs the target wheel end electric creep torque to drive the vehicle to travel, the first motor rotates along therewith and does not output a torque instruction, and the clutch maintains the default engaged state; if T2*i2<T_creep≤T1*i1, the first motor outputs the target wheel end electric creep torque to drive the vehicle to travel, the second motor rotates along therewith and does not output a torque instruction, and the clutch maintains the default engaged state; and if T1*i1<T_creep, the first motor outputs a maximum torque, the second motor outputs a difference value between the target wheel end electric creep torque and the maximum torque of the first motor, and the clutch maintains the default engaged state.

Drive traveling control:
when the vehicle is driven to travel, the VCU calculates a wheel end-required driver torque T_driver according to an accelerator pedal opening degree, a brake pedal state and a vehicle speed signal; and at this time, the MCU1 reports a maximum available torque T3 of the first motor according to the state of the first motor, and the maximum torque, which can be generated by the first motor, on the wheel end is T3*i1, i1 being a product of the speed ratio of the first transmission mechanism and the speed ratio of the first final reduction drive; and at this time, the MCU2 reports a maximum available torque T4 of the second motor according to the state of the second motor, and the maximum torque, which can be generated by the second motor, on the wheel end is T4*i2, i2 being a product of the speed ratio of the second transmission mechanism and the speed ratio of the second final reduction drive; and
when T_driver≤T4*i2, i.e. in the area A and the area B in Fig. 1e (the area D in Fig. 1f), at this time, the second motor individually drives the vehicle to travel, the second motor outputs power according to torque requirement required by a driver, the clutch is disengaged, and the first motor is in a static state and does not output a torque. As shown in Fig. 1a, due to the disengagement of the clutch, at this time, the first motor is separated from the wheels, and at this time, the mechanical frictional resistance of the first motor itself will not hinder the forward movement of the vehicle; and as shown in Fig. 1b, due to the disengagement of the clutch, at this time, the first motor and the first transmission mechanism are both separated from the wheels, and at this time, the mechanical frictional resistances of the first motor and the first transmission mechanism themselves will not hinder the forward movement of the vehicle. The first motor is static, and permanent magnet synchronous motors will not generate a field-weakening current to consume battery power. Compared with the related art (without a clutch), the resistance of the vehicle is lower, and as one motor drives the vehicle, the use efficiency of the motor is higher, the power consumption of the whole vehicle is lower, and the endurance mileage is longer.

When T4*i2<T_driver≤T3*i1+T4*i2, i.e. in the areas C in Fig. 1e (the areas E and the areas F in Fig. 1f):
both the first motor and the second motor participate in driving the vehicle, and the clutch is engaged, wherein an output torque of the first motor is T_driver*ϕ/i1,
an output torque of the second motor is T_driver*(1-ϕ)/i2, and it also needs to be considered that the output torques cannot exceed the maximum available torque of the first motor or the second motor, and ϕ is a front-rear torque distribution coefficient, and the determination method of the front-rear torque distribution coefficient is as follows. ϕ is obtained by means of a table look-up method, and a table of the front-rear torque distribution coefficients is as shown in Table 1 below.

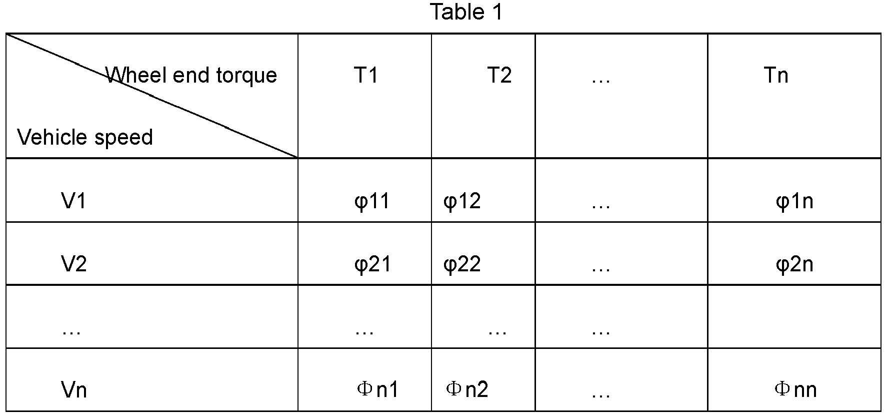

The table is obtained by the following method:
for a combination (Vx, Tx) of vehicle speed and wheel end torque, the front-rear torque distribution coefficient is enumerated as (ϕ1, ϕ2, ..., ϕn).

There is a front-rear torque distribution coefficient ϕx which corresponds to the highest combined drive efficiency of the two motors, that is, the battery power consumption is the minimum, and ϕx at this time is the front-rear torque distribution coefficient corresponding to the combination (Vx, Tx) of vehicle speed and wheel end torque. For example, for a combination of a vehicle speed of 20 Km/h and a wheel end torque of 2000 Nm, by taking every 0.01 as one point, there are 99 front-rear torque distribution coefficients between 0 and 1; and there must be a value (assuming that the value is 0.4) among the 99 numbers, which corresponds to the highest combined drive efficiency of the front and rear motors, then the front-rear torque distribution coefficient corresponding to the combination (20 km/h, 2000 Nm) of vehicle speed and wheel end torque is 0.4, and this coefficient is filled in the table above. By analogy according to this method, optimal front-rear torque distribution coefficients corresponding to other combinations of vehicle speed and wheel end torque are obtained, and finally a complete two-dimensional table is obtained, as shown in Table 1.

Brake control:
during braking, a braking-required torque is defined as a negative value. Likewise, allowable braking feedback torques of the first motor and the second motor are also negative values. In order to avoid ambiguity, in the following description process, the magnitude of torque value is the magnitude of absolute value, and does not include a negative sign.

The VCU calculates a wheel end-required braking torque T_brake according to the magnitude of a driver brake master cylinder pressure, an accelerator pedal state, etc.; and the first motor and the second motor respectively report the magnitudes of braking torques T5, T6 allowed thereby, wherein i1 and i2 are respectively a product of the speed ratio of the first transmission mechanism and the speed ratio of the first final reduction drive, and a product of the speed ratio of the second transmission mechanism and the speed ratio of the second final reduction drive.

When T_brake≤T6*i2, i.e. in the area G and the area H in Fig. 1g (the area J in Fig. 1h), the VCU sends a control command according to a braking-required torque, the second motor generates power and generates a torque of T_brake/i2, and a negative torque generated thereby brakes the vehicle, and the electric energy generated by the second motor is stored in the power battery, the clutch is disengaged, the first motor does not operate and does not rotate along therewith; and at this time, one motor performs braking recovery, which achieves a higher efficiency and recovers more electric energy compared with two motors performing recovery respectively, facilitating more reduction of the overall power consumption of the vehicle.

When T6*i2<T_brake≤T5*i1+T6*i2, i.e. in the area I in Fig. 1g (the area K and the area L in Fig. 1h), the second motor generates power, the torque generated thereby is a maximum torque T6, and a negative torque generated thereby brakes the vehicle, and the generated electric energy is stored in the power battery; and insufficient braking requirement is T_brake-T6*i2, this insufficient part is supplemented by the first motor, the clutch is engaged, and the first motor generates a negative torque of (T_brake-T6*i2)/i1.

When T5*i1+T6*i2<T_brake, the braking torque required at this time is very large, and it is considered that the driver is performing emergency braking; and in order to ensure braking safety, the braking energy recovery function is exited, neither the first motor nor the second motor generates a torque, the clutch maintains the default engaged state, and the first motor and the second motor are in a rotation follow-up state. The driver-required braking torque is all achieved by a conventional mechanical hydraulic system.

(II) With regard to combination 2: the clutch is arranged on the front axle (as shown in Fig. 1a or Fig. 1b), and the clutch is a one-way clutch, a control method therefor is as follows:
drive start control:
at this time, the MCU1 reports a maximum available torque T7 of the first motor according to the state of the first motor, and the maximum torque, which can be generated by the first motor, on the wheel end is T7*i1, i1 being a product of the speed ratio of the first transmission mechanism and the speed ratio of the first final reduction drive; and at this time, the MCU2 reports a maximum available torque T8 of the second motor according to the state of the second motor, and the maximum torque, which can be generated by the second motor, on the wheel end is T8*i2, i2 being a product of the speed ratio of the second transmission mechanism and the speed ratio of the second final reduction drive; and
when the vehicle starts, the torques of the motors are controlled according to the opening degrees of the accelerator pedal and the brake pedal, and the vehicle speed. When the driver releases the brake pedal while not pressing the accelerator pedal, the VCU performs PTD control according to the current vehicle speed and a target electric creep vehicle speed, and outputs a target wheel end electric creep torque T_creep. The electric creep vehicle speed is 3 to 7 km/h.

When T7*i1≤T8*i2:
if T_creep≤T7*i1, the first motor outputs a target motor torque to drive the vehicle to travel, the second motor rotates along therewith and does not output a torque instruction; if T7*i1<T_creep≤T8*i2, the second motor outputs the target motor torque to drive the vehicle to travel, the first motor rotates along therewith and does not output a torque instruction; and if T8*i2<T_creep, the second motor outputs a maximum torque, the first motor outputs a difference value between the target motor torque and the maximum torque of the second motor.

When T7*i1 >T8*i2: if T_creep≤T8*i2, the second motor outputs the target motor torque to drive the vehicle to travel, the first motor rotates along therewith and does not output a torque instruction; if T8*i2<T_creep≤T7*i1, the first motor outputs the target motor torque to drive the vehicle to travel, the second motor rotates along therewith and does not output a torque instruction; and if T7*i1<T_creep, the first motor outputs a maximum torque, and the second motor outputs a difference value between the target motor torque and the maximum torque of the first motor.

Drive traveling control:
the clutch is a one-way clutch, and does not need to be controlled, and is a mechanical component with a fixed characteristic. The remaining control method is the same as the corresponding drive travelling control method in "combination 1: the clutch is arranged on the front axle (as shown in Fig. 1a or Fig. 1b), and the clutch is a two-way clutch".

When the vehicle is driven to travel, the VCU calculates a wheel end-required driver torque T_driver according to an accelerator pedal opening degree, a brake pedal state and a vehicle speed signal; at this time, the MCU1 reports a maximum available torque T9 of the first motor according to the state of the first motor, and the maximum torque, which can be generated by the first motor, on the wheel end is T9*i1, i1 being a product of the speed ratio of the first transmission mechanism and the speed ratio of the first final reduction drive; and at this time, the MCU2 reports a maximum available torque T10 of the second motor according to the state of the second motor, and the maximum torque, which can be generated by the second motor, on the wheel end is T10*i2, i2 being a product of the speed ratio of the second transmission mechanism and the speed ratio of the second final reduction drive; and
when T_driver≤T10*i2, at this time, the second motor individually drives the vehicle to travel, the second motor outputs power according to torque requirement required by the driver, and the first motor is in a static state and does not output a torque. The first motor is static, and permanent magnet synchronous motors will not generate a magnetic field-weakening current to consume battery power. Compared with the related art (without a clutch), the resistance of the vehicle is lower, and as one motor drives the vehicle, the use efficiency of the motor is higher, the power consumption of the whole vehicle is lower, and the endurance mileage is longer.

When T10*i2<T_driver≤T9*i1+T10*i2, both the first motor and the second motor participate in driving the vehicle, wherein an output torque of the first motor is T_driver*ϕ/i1, and
an output torque of the second motor is T_driver*(1-ϕ)/i2.

Brake control:
during braking, a braking-required torque is defined as a negative value. Likewise, allowable braking feedback torques of the first motor and the second motor are also negative values. In order to avoid ambiguity, in the following description process, the magnitude of torque value is the magnitude of absolute value, and does not include a negative sign.

The VCU calculates a wheel end-required braking torque T_brake according to the magnitude of a driver brake master cylinder pressure, an accelerator pedal state, etc.; and the first motor and the second motor respectively report the magnitudes of braking torques T11, T12 allowed thereby, wherein i1 is a product of the speed ratio of the first transmission mechanism and the speed ratio of the first final reduction drive, and i2 is a product of the speed ratio of the second transmission mechanism and the speed ratio of the second final reduction drive respectively.

When T_brake≤T12*i2, the VCU sends a control command according to a braking-required torque, the second motor generates power and generates a torque of T_brake/i2, and a negative torque generated thereby brakes the vehicle, and the electric energy generated thereby is stored in the power battery, and the first motor does not operate and does not rotate along therewith; and at this time, one motor performs braking recovery, which achieves a higher efficiency and recovers more electric energy compared with two motors performing recovery respectively, facilitating more reduction of the overall power consumption of the vehicle.

When T12*i2<T_brake≤T11*i1+T12*i2, at this time, the second motor generates power and generates a maximum power of T12, and the negative torque generated thereby brakes the vehicle, and the electric energy generated thereby is stored in the power battery; and the first motor neither operates nor rotates along therewith. Insufficient braking requirement is T_brake-T12*i2, and this insufficient part is supplemented by a conventional mechanical hydraulic braking system.

When T11*i1+T12*i2<T_brake, the braking torque required at this time is very large, and it is considered that the driver is performing emergency braking; and in order to ensure braking safety, the braking energy recovery function is exited, neither the first motor nor the second motor generates a torque, the clutch maintains the default engaged state, and the first motor and the second motor are in a rotation follow-up state. The driver-required braking torque is all achieved by a conventional mechanical hydraulic system.

(III). With regard to combination 3: the clutch is arranged on the rear axle (as shown in Fig. 1c or Fig. 1d), and the clutch is a two-way clutch, a control method therefor is as follows:
drive start control:
at this time, the MCU1 reports a maximum available torque T13 of the first motor according to the state of the first motor, and the maximum torque, which can be generated by the first motor, on the wheel end is T13*i1, i1 is a product of the speed ratio of the first transmission mechanism and the speed ratio of the first final reduction drive; and at this time, the MCU2 reports a maximum available torque T14 of the second motor according to the state of the second motor, and the maximum torque, which can be generated by the second motor, on the wheel end is T14*i2, i2 is a product of the speed ratio of the second transmission mechanism and the speed ratio of the second final reduction drive; and
the default state of the clutch is an engaged state, and when the vehicle starts, the torques of the motors are controlled according to the opening degrees of the accelerator pedal and the brake pedal, and the vehicle speed. When a driver releases the brake pedal while not pressing the accelerator pedal, the VCU performs PTD control according to the current vehicle speed and the target electric creep driving speed, and outputs a target wheel end electric creep torque T_creep. The electric creep vehicle speed is 3 to 7 km/h.

When T13*i1≤T14*i2:
if T_creep≤T13*i1, the first motor outputs a target motor torque to drive the vehicle to travel, the second motor rotates along therewith and does not output a torque instruction, and the clutch maintains the default engaged state; if T13*i1 <T_creep≤T14*i2, the second motor outputs the target motor torque to drive the vehicle to travel, the first motor rotates along therewith and does not output a torque instruction, and the clutch maintains the default engaged state; and if T14*i2<T_creep, the second motor outputs a maximum torque, the first motor outputs a difference value between the target motor torque and the maximum torque of the second motor, and the clutch maintains the default engaged state.

When T13*i1>T14*i2: the control method is similar to T13*i1≤T14*i2, and will not be repeated again.

Drive traveling control:
when the vehicle is driven to travel, the VCU calculates a wheel end-required driver torque T_driver according to an accelerator pedal opening degree, a brake pedal state and a vehicle speed signal; at this time, the MCU1 reports a maximum available torque T15 of the first motor according to the state of the first motor, and the maximum torque, which can be generated by the first motor, on the wheel end is T15*i1, i1 being a product of the speed ratio of the first transmission mechanism and the speed ratio of the first final reduction drive; and at this time, the MCU2 reports a maximum available torque T16 of the second motor according to the state of the second motor, and the maximum torque, which can be generated by the second motor, on the wheel end is T16*i2, i2 being a product of the speed ratio of the second transmission mechanism and the speed ratio of the second final reduction drive; and
when T_driver≤T15*i1, at this time, the first motor individually drives the vehicle to travel, the first motor outputs power according to torque requirement required by the driver, the clutch is disengaged, and the second motor is in a static state and does not output a torque. As shown in Fig. 1d, due to the disengagement of the clutch, at this time, the second motor is separated from the wheels, and at this time, the mechanical frictional resistance of the second motor itself will not hinder the forward movement of the vehicle; and as shown in Fig. 1c, due to the disengagement of the clutch, at this time, the second motor and the second transmission mechanism are both separated from the wheels, and at this time, the mechanical frictional resistances of the second motor and the second transmission mechanism themselves will not hinder the forward movement of the vehicle. The second motor is static, and permanent magnet synchronous motors will not generate a field-weakening current to consume battery power. Compared with the related art (without a clutch), the resistance of the vehicle is lower, and as one motor drives the vehicle, the use efficiency of the motor is higher, the power consumption of the whole vehicle is lower, and the endurance mileage is longer.

When T15*i1<T_driver≤T15*i1+T16*i2:
both the first motor and the second motor participate in driving the vehicle, and the clutch is engaged, wherein an output torque of the first motor is T_driver*ϕ/i1,
an output torque of the second motor is T_driver*(1-ϕ)/i2, and it also needs to be considered that the output torques cannot exceed the maximum available torque of the first motor or the second motor, and ϕ is a front-rear torque distribution coefficient, and the determination method thereof is as follows. ϕ is obtained by means of a table look-up method, and a table thereof is as shown in Table 1 above.

Brake control:
during braking, a braking-required torque is defined as a negative value. Likewise, allowable braking feedback torques of the first motor and the second motor are also negative values. In order to avoid ambiguity, in the following description process, the magnitude of torque value is the magnitude of absolute value, and does not include a negative sign.

The VCU calculates a wheel end-required braking torque T_brake according to the magnitude of a driver brake master cylinder pressure, an accelerator pedal state, etc.; and the first motor and the second motor respectively report the magnitudes of braking torques T17, T18 allowed thereby, wherein i1 and i2 are respectively a product of the speed ratio of the first transmission mechanism and the speed ratio of the first final reduction drive, and a product of the speed ratio of the second transmission mechanism and the speed ratio of the second final reduction drive.

When T_brake≤T17*i1, the VCU sends a control command according to a braking-required torque, the first motor generates power and generates a torque of T_brake/i1, and a negative torque generated thereby brakes the vehicle, and the electric energy generated thereby is stored in the power battery, the clutch is disengaged, and the second motor neither operates nor rotates along therewith; and at this time, one motor performs braking recovery, which achieves a higher efficiency and recovers more electric energy compared with two motors performing recovery respectively, facilitating more reduction of the overall power consumption of the vehicle.

When T17*i1<T_brake≤T17*i1+T18*i2, at this time, the first motor generates power and generates a maximum torque of T17, and a negative torque generated thereby brakes the vehicle, and the generated electric energy is stored in the power battery; and insufficient braking requirement is T_brake-T17*i1, this insufficient part is supplemented by the second motor, the clutch is engaged, and the second motor generates a negative torque of (T_brake-T17*i1)/i2.

When T17*i1+T18*i2<T_brake, the braking torque required at this time is very large, and it is considered that the driver is performing emergency braking; and in order to ensure braking safety, the braking energy recovery function is exited, neither the first motor nor the second motor generates a torque, the clutch maintains the default engaged state, and the first motor and the second motor are in a rotation follow-up state. The driver-required braking torque is all achieved by a conventional mechanical hydraulic system.

(IV) With regard to combination 4: the clutch is arranged on the rear axle (as shown in Fig. 1c or Fig. 1d), and the clutch is a one-way clutch, a control method therefor is as follows:
drive start control:
at this time, the MCU1 reports a maximum available torque T19 of the first motor according to the state of the first motor, and the maximum torque, which can be generated by the first motor, on the wheel end is T19*i1, i1 being a product of the speed ratio of the first transmission mechanism and the speed ratio of the first final reduction drive; and at this time, the MCU2 reports a maximum available torque T20 of the second motor according to the state of the second motor, and the maximum torque, which can be generated by the second motor, on the wheel end is T20*i2, i2 being a product of the speed ratio of the second transmission mechanism and the speed ratio of the second final reduction drive; and
when the vehicle starts, the torques of the motors are controlled according to the opening degrees of the accelerator pedal and the brake pedal, and the vehicle speed. When the driver releases the brake pedal while not pressing the accelerator pedal, the VCU performs PTD control according to the current vehicle speed and a target electric creep vehicle speed, and outputs a target wheel end electric creep torque T_creep. The electric creep vehicle speed is 3 to 7 km/h.

When T19*i1≤T20*i2:
if T_creep≤T19*i1, the first motor outputs a target motor torque to drive the vehicle to travel, the second motor rotates along therewith and does not output a torque instruction; if T19*i1 <T_creep≤T20*i2, the second motor outputs the target motor torque to drive the vehicle to travel, the first motor rotates along therewith and does not output a torque instruction; and if T20*i2<T_creep, the second motor outputs a maximum torque, and the first motor outputs a difference value between the target motor torque and the maximum torque of the second motor.

When T19*i1>T20*i2: the control method is similar to T19*i1≤T20*i2, and will not be repeated again.

Drive traveling control:
the clutch is a one-way clutch, and does not need to be controlled, and is a mechanical component with a fixed characteristic. The remaining control method is the same as the corresponding drive travelling control method in "combination 1: the clutch is arranged on the front axle (as shown in Fig. 1a or Fig. 1b), and the clutch is a two-way clutch".

When the vehicle is driven to travel, the VCU calculates a wheel end-required driver torque T_driver according to an accelerator pedal opening degree, a brake pedal state and a vehicle speed signal; at this time, the MCU1 reports a maximum available torque T21 of the first motor according to the state of the first motor, and the maximum torque, which can be generated by the first motor, on the wheel end is T21*i1, i1 being a product of the speed ratio of the first transmission mechanism and the speed ratio of the first final reduction drive; and at this time, the MCU2 reports a maximum available torque T2 of the second motor according to the state of the second motor, and the maximum torque, which can be generated by the second motor, on the wheel end is T22*i2, i2 being a product of the speed ratio of the second transmission mechanism and the speed ratio of the second final reduction drive; and
when T_driver≤T21*i1, at this time, the first motor individually drives the vehicle to travel, the first motor outputs power according to torque requirement required by the driver, and the second motor is in a static state and does not output a torque. The second motor is static, and permanent magnet synchronous motors will not generate a field-weakening current to consume battery power. Compared with the related art (without a clutch), the resistance of the vehicle is lower, and as one motor drives the vehicle, the use efficiency of the motor is higher, the power consumption of the whole vehicle is lower, and the endurance mileage is longer.

When T22*i2<T_driver≤T21*i1+T22*i2, both the first motor and the second motor participate in driving the vehicle, wherein an output torque of the first motor is T_driver*ϕ/i1, and
an output torque of the second motor is T_driver*(1-ϕ)/i2.

Brake control:
during braking, a braking-required torque is defined as a negative value. Likewise, allowable braking feedback torques of the first motor and the second motor are also negative values. In order to avoid ambiguity, in the following description process, the magnitude of torque value is the magnitude of absolute value, and does not include a negative sign.

The VCU calculates a wheel end-required braking torque T_brake according to the magnitude of a driver brake master cylinder pressure, an accelerator pedal state, etc.; and the first motor and the second motor respectively report the magnitudes of braking torques T23, T24 allowed by their own, wherein i1 and i2 are respectively a product of the speed ratio of the first transmission mechanism and the speed ratio of the first final reduction drive, and a product of the speed ratio of the second transmission mechanism and the speed ratio of the second final reduction drive.

When T_brake≤T23*i1, the VCU sends a control command according to the braking-required torque, the first motor generates power and generates a torque of T_brake/i1, and a negative torque generated thereby brakes the vehicle, and the electric energy generated thereby is stored in the power battery, and the second motor neither operates nor rotates along therewith; and at this time, one motor performs braking recovery, which achieves a higher efficiency and recovers more electric energy compared with two motors performing recovery respectively, facilitating more reduction of the overall power consumption of the vehicle.

When T23*i1<T_brake≤T23*i1+T24*i2, the first motor generates power and generates a maximum torque of 23, and the negative torque generated thereby brakes the vehicle, and the electric energy generated thereby is stored in the power battery; and the second motor neither operates nor rotates along therewith. Insufficient braking requirement is T_brake-T23*i1, and this insufficient part is supplemented by a conventional mechanical hydraulic braking system.

When T23*i1+T24*i2<T_brake, the braking torque required at this time is very large, and it is considered that the driver is performing emergency braking; and in order to ensure braking safety, the braking energy recovery function is exited, neither the first motor nor the second motor generates a torque, the clutch maintains the default engaged state, and the first motor and the second motor are in a rotation follow-up state. The driver-required braking torque is all achieved by a conventional mechanical hydraulic system.

In the technical solutions of the present embodiment, the clutch is arranged between the first motor and the first transmission mechanism; wherein the first motor is arranged on the front axle; or the clutch is arranged between the first transmission mechanism and the first reducer; or the clutch is arranged between the second motor and the second transmission mechanism, wherein the second motor is arranged on a rear axle; or the clutch is arranged between the second transmission mechanism and the second reducer. The technical solutions of some embodiments of the present invention can reduce the loss of rotation follow-up of a motor, such that the vehicle has a lower resistance when driven, a lower power consumption and a longer endurance mileage.

The power system for the four-wheel drive battery electric vehicle provided in the embodiments of the present invention includes: a first motor, a second motor, a first transmission mechanism, a second transmission mechanism, a clutch, a first reducer and a second reducer; wherein the clutch is arranged between the first motor and the first transmission mechanism, wherein the first motor is arranged on a front axle; or the clutch is arranged between the first transmission mechanism and the first reducer; or the clutch is arranged between the second motor and the second transmission mechanism, wherein the second motor is arranged on a rear axle; or the clutch is arranged between the second transmission mechanism and the second reducer. Some embodiments of the present invention are able to reduce the loss of rotation follow-up of a motor, such that the vehicle has a lower resistance when driven, a lower power consumption and a longer endurance mileage.

## Claims

1. A power system for a four-wheel drive battery electric vehicle, comprising: a first motor, a second motor, a first transmission mechanism, a second transmission mechanism, a clutch, a first reducer and a second reducer;
wherein the clutch is arranged between the first motor and the first transmission mechanism, wherein the first motor is arranged on a front axle;
or the clutch is arranged between the first transmission mechanism and the first reducer;
or the clutch is arranged between the second motor and the second transmission mechanism, wherein the second motor is arranged on a rear axle;
or the clutch is arranged between the second transmission mechanism and the second reducer.

2. The power system for the four-wheel drive battery electric vehicle according to claim 1, wherein the clutch comprises a one-way clutch or a two-way clutch.

3. The power system for the four-wheel drive battery electric vehicle according to claim 2, further comprising: a first motor control unit, a second motor control unit and a vehicle control unit;
if the clutch is arranged on the front axle and the clutch is a two-way clutch, the first motor control unit reports a first torque according to a state of the first motor, and the second motor control unit reports a second torque according to a state of the second motor;
when a pressure on a brake master cylinder is zero and an opening degree of an accelerator pedal is zero, the vehicle control unit determines a target wheel end electric creep torque according to a current vehicle speed and a target electric creep vehicle speed;
when the first torque is less than or equal to the second torque, if the target wheel end electric creep torque is less than or equal to the first torque, the first motor outputs the target wheel end electric creep torque to drive a vehicle to travel, the second motor rotates along therewith, and the clutch is in an engaged state; if the first torque is less than the target wheel end electric creep torque, and the target wheel end electric creep torque is less than or equal to the second torque, the second motor outputs the target wheel end electric creep torque to drive the vehicle to travel, and the first motor rotates along therewith; and if the second torque is less than the target wheel end electric creep torque, the second motor outputs the second torque, the first motor outputs a first differential torque, the first differential torque being a differential torque between the target wheel end electric creep torque and the second torque, and the clutch is in an engaged state;
when the first torque is greater than the second torque, if the target wheel end electric creep torque is less than or equal to the second torque, the second motor outputs the target wheel end electric creep torque to drive the vehicle to travel, and the first motor rotates along therewith, and the clutch is in an engaged state; if the second torque is less than the target wheel end electric creep torque, and the target wheel end electric creep torque is less than or equal to the first torque, the first motor outputs the target wheel end electric creep torque to drive the vehicle to travel, and the second motor rotates along therewith, and the clutch is in an engaged state; and if the first torque is less than the target wheel end electric creep torque, the first motor outputs the first torque and acquires a second differential torque between the target wheel end electric creep torque and the first torque, and the second motor outputs the second differential torque; wherein the first torque is a current maximum available torque of the first motor, and the second torque is a current maximum available torque of the second motor.

4. The power system for the four-wheel drive battery electric vehicle according to claim 3, further comprising:
when the vehicle is driven to travel, the vehicle control unit calculates a wheel end-required driver torque according to an accelerator pedal opening degree, a brake pedal state and a vehicle speed signal;
the first motor control unit reports a third torque according to a state of the first motor, and the second motor control unit reports a fourth torque according to a state of the second motor;
when the wheel end-required driver torque is less than or equal to the fourth torque, the second motor outputs the wheel end-required driver torque, and switches the clutch from an engaged state to a disengaged state, the first motor is in a static state, and the first motor does not output a torque; and
when the fourth torque is less than the wheel end-required driver torque and the wheel end-required driver torque is less than or equal to a sum of the third torque and the fourth torque, a first target torque is calculated according to the wheel end-required driver torque, a front torque distribution coefficient, and a product of a speed ratio of the first transmission mechanism and a speed ratio of a first final reduction drive, and the first motor outputs the first target torque; and a second target torque is calculated according to the wheel end-required driver torque, a rear torque distribution coefficient, and a product of a speed ratio of the second transmission mechanism and a speed ratio of a second final reduction drive, and the second motor outputs the second target torque, and the clutch is in an engaged state; wherein the third torque is a current maximum available torque of the first motor, and the fourth torque is a current maximum available torque of the second motor.

5. The power system for the four-wheel drive battery electric vehicle according to claim 4, further comprising:
the vehicle control unit calculates a wheel end-required braking torque according to a magnitude of a driver brake master cylinder pressure and an accelerator pedal state;
the first motor control unit reports a fifth torque according to the state of the first motor, and the second motor control unit reports a sixth torque according to the state of the second motor;
when the wheel end-required braking torque is less than or equal to the sixth torque, the second motor outputs a third target torque, the third target torque being a ratio of the wheel end-required braking torque to a second speed ratio product, the second speed ratio product being a product of the speed ratio of the second transmission mechanism and the speed ratio of the second final reduction drive, the clutch is in a disengaged state, the first motor is in a non-operating state, and the first motor does not rotate along therewith;
when the sixth torque is less than the wheel end-required braking torque, and the wheel end-required braking torque is less than or equal to a sum of the fifth torque and the sixth torque, the second motor outputs the sixth torque, and acquires a third differential torque between the wheel end-required braking torque and the sixth torque, the first motor outputs a fourth target torque, the fourth target torque being a ratio of the third differential torque to a first speed ratio product, the first speed ratio product being a product of the speed ratio of the first transmission mechanism and the speed ratio of the first final reduction drive, and the clutch is in an engaged state; and
when the wheel end-required braking torque is greater than a sum of the fifth torque and the sixth torque, the clutch is in an engaged state, neither the first motor nor the second motor generates a torque, and both the first motor and the second motor are in a rotation follow-up state, wherein the fifth torque is a current maximum available torque of the first motor, and the sixth torque is a current maximum available torque of the second motor.

6. The power system for the four-wheel drive battery electric vehicle according to claim 2, further comprising: a first motor control unit, a second motor control unit and a vehicle control unit;
if the clutch is arranged on the front axle and the clutch is a one-way clutch, the first motor control unit reports a seventh torque according to a state of the first motor, and the second motor control unit reports an eighth torque according to a state of the second motor;
when a pressure on a brake master cylinder is zero and an opening degree of an accelerator pedal is zero, the vehicle control unit determines a target wheel end electric creep torque according to a current vehicle speed and a target electric creep vehicle speed;
when the seventh torque is less than or equal to the eighth torque, if the target wheel end electric creep torque is less than or equal to the seventh torque, the first motor outputs the target wheel end electric creep torque to drive the vehicle to travel, and the second motor rotates along therewith; when the seventh torque is less than the target wheel end electric creep torque, and the target wheel end electric creep torque is less than or equal to the eighth torque, the second motor outputs the target wheel end electric creep torque to drive the vehicle to travel, and the first motor rotates along therewith; if the eighth torque is less than the target wheel end electric creep torque, the second motor outputs the eighth torque, and the first motor outputs a fourth differential torque, the fourth differential torque being a differential torque between a target motor torque and the eighth torque;
when the seventh torque is greater than the eighth torque, if the target wheel end electric creep torque is less than or equal to the eighth torque, the second motor outputs the target wheel end electric creep torque to drive the vehicle to travel, and the first motor rotates along therewith; when the eighth torque is less than the target wheel end electric creep torque, and the target wheel end electric creep torque is less than or equal to the seventh torque, the first motor outputs the target wheel end electric creep torque to drive the vehicle to travel, and the second motor rotates along therewith; if the seventh torque is less than the target wheel end electric creep torque, the first motor outputs the seventh torque and acquires a fifth differential torque between the target wheel end electric creep torque and the seventh torque, and the second motor outputs the fifth differential torque, wherein the seventh torque is a current maximum available torque of the first motor, and the eighth torque is a current maximum available torque of the second motor.

7. The power system for the four-wheel drive battery electric vehicle according to claim 6, further comprising:
when the vehicle is driven to travel, the vehicle control unit calculates a wheel end-required driver torque according to an accelerator pedal opening degree, a brake pedal state and a vehicle speed signal;
the first motor control unit reports a ninth torque according to the state of the first motor, and the second motor control unit reports a tenth torque according to the state of the second motor;
when the wheel end-required driver torque is less than or equal to the tenth torque, the second motor outputs the wheel end-required driver torque, the first motor is in a static state, and the first motor does not output a torque;
when the tenth torque is less than the wheel end-required driver torque and the wheel end-required driver torque is less than or equal to a sum of the ninth torque and the tenth torque, a first target torque is calculated according to the wheel end-required driver torque, a front torque distribution coefficient, and a product of a speed ratio of the first transmission mechanism and a speed ratio of the first final reduction drive, the first motor outputs the first target torque; and a second target torque is calculated according to the wheel end-required driver torque, a rear torque distribution coefficient, and a product of the speed ratio of the first transmission mechanism and the speed ratio of the first final reduction drive, and the second motor outputs the second target torque, wherein the ninth torque is a current maximum available torque of the first motor, and the tenth torque is a current maximum available torque of the second motor.

8. The power system for the four-wheel drive battery electric vehicle according to claim 7, further comprising:
the vehicle control unit calculates a wheel end-required braking torque according to a magnitude of a driver brake master cylinder pressure and an accelerator pedal state;
the first motor control unit reports an eleventh torque according to the state of the first motor, and the second motor control unit reports a twelfth torque according to the state of the second motor;
when the wheel end-required braking torque is less than or equal to the twelfth torque, the second motor outputs a third target torque, the third target torque being a ratio of the wheel end-required braking torque to a second speed ratio product, the second speed ratio product being a product of the speed ratio of the second transmission mechanism and the speed ratio of the second final reduction drive;
when the twelfth torque is less than the wheel end-required braking torque, and the wheel end-required braking torque is less than or equal to a sum of the eleventh torque and the twelfth torque, the second motor outputs the twelfth torque, the first motor does not operate and does not rotate along therewith, and acquires a sixth differential torque between the wheel end-required braking torque and the twelfth torque, and a mechanical hydraulic braking system outputs the sixth differential torque;
when the wheel end-required braking torque is greater than a sum of the eleventh torque and the twelfth torque, the first motor and the second motor are in a rotation follow-up state, wherein the eleventh torque is a current maximum available torque of the first motor, and the twelfth torque is a current maximum available torque of the second motor.

9. The power system for the four-wheel drive battery electric vehicle according to claim 2, further comprising: a first motor control unit, a second motor control unit and a vehicle control unit;
if the clutch is arranged on the rear axle and the clutch is a two-way clutch, the first motor control unit reports a thirteenth torque according to the state of the first motor, and the second motor control unit reports a fourteenth torque according to the state of the second motor;
when a pressure on a brake master cylinder is zero and an opening degree of an accelerator pedal is zero, the vehicle control unit determines a target wheel end electric creep torque according to a current vehicle speed and a target electric creep vehicle speed;
when the thirteenth torque is less than or equal to the fourteenth torque, if the target wheel end electric creep torque is less than or equal to the thirteenth torque, the first motor outputs the target wheel end electric creep torque to drive the vehicle to travel, the second motor rotates along therewith, and the clutch is in an engaged state; if the thirteenth torque is less than the target wheel end electric creep torque, and the target wheel end electric creep torque is less than or equal to the fourteenth torque, the second motor outputs the target wheel end electric creep torque to drive the vehicle to travel, and the first motor rotates along therewith; and if the fourteenth torque is less than the target wheel end electric creep torque, the second motor outputs the fourteenth torque, the first motor outputs a seventh differential torque, the seventh differential torque being a differential torque between the target wheel end electric creep torque and the fourteenth torque, and the clutch is in an engaged state;
when the thirteenth torque is greater than the fourteenth torque, if the target wheel end electric creep torque is less than or equal to the fourteenth torque, the second motor outputs the target wheel end electric creep torque to drive the vehicle to travel, the first motor rotates along therewith, and the clutch is in an engaged state; if the fourteenth torque is less than the target wheel end electric creep torque, and the target wheel end electric creep torque is less than or equal to the thirteenth torque, the first motor outputs the target wheel end electric creep torque to drive the vehicle to travel, the second motor rotates along therewith, and the clutch is in an engaged state; and if the thirteenth torque is less than the target wheel end electric creep torque, the first motor outputs the thirteenth torque and acquires an eighth differential torque between the target wheel end electric creep torque and the thirteenth torque, and the second motor outputs the eighth differential torque; wherein the thirteenth torque is a current maximum available torque of the first motor, and the fourteenth torque is a current maximum available torque of the second motor;
when the vehicle is driven to travel, the vehicle control unit calculates a wheel end-required driver torque according to an accelerator pedal opening degree, a brake pedal state and a vehicle speed signal;
the first motor control unit reports a fifteenth torque according to the state of the first motor, and the second motor control unit reports a sixteenth torque according to the state of the second motor;
when the wheel end-required driver torque is less than or equal to the fifteenth torque, the first motor outputs the wheel end-required driver torque, and switches the clutch from an engaged state to a disengaged state, the second motor is in a static state, and the second motor does not output a torque;
when the fifteenth torque is less than the wheel end-required driver torque and the wheel end-required driver torque is less than or equal to a sum of the fifteenth torque and the sixteenth torque, a first target torque is calculated according to the wheel end-required driver torque, a front torque distribution coefficient, and a product of a speed ratio of the first transmission mechanism and a speed ratio of a first final reduction drive, and the first motor outputs the first target torque; and a second target torque is calculated according to the wheel end-required driver torque, a rear torque distribution coefficient, and a product of a speed ratio of the second transmission mechanism and a speed ratio of a second final reduction drive, and the second motor outputs the second target torque, and the clutch is in an engaged state; wherein the fifteenth torque is a current maximum available torque of the first motor, and the sixteenth torque is a current maximum available torque of the second motor;
the vehicle control unit calculates a wheel end-required braking torque according to the magnitude of a driver brake master cylinder pressure and an accelerator pedal state;
the first motor control unit reports a seventeenth torque according to the state of the first motor, and the second motor control unit reports an eighteenth torque according to the state of the second motor;
when the wheel end-required braking torque is less than or equal to the seventeenth torque, the first motor outputs a fifth target torque, the fifth target torque being a ratio of the wheel end-required braking torque to a first speed ratio product, the first speed ratio product being a product of the speed ratio of the first transmission mechanism and the speed ratio of the first final reduction drive, and the clutch is in a disengaged state, the second motor is in a non-operating state, and the second motor does not rotate along therewith;
when the seventeenth torque is less than the wheel end-required braking torque, and the wheel end-required braking torque is less than or equal to a sum of the seventeenth torque and the eighteenth torque, the first motor outputs the seventeenth torque, and acquires a ninth differential torque between the wheel end-required braking torque and the seventeenth torque, the second motor outputs a fifth target torque, the fifth target torque being a ratio of the ninth differential torque to the first speed ratio product, the first speed ratio product being a product of the speed ratio of the first transmission mechanism and the speed ratio of the first final reduction drive, and the clutch is in an engaged state; and
when the wheel end-required braking torque is greater than a sum of the seventeenth torque and the eighteenth torque, the clutch is in an engaged state, neither the first motor nor the second motor generates a torque, and both the first motor and the second motor are in a rotation follow-up state, wherein the seventeenth torque is a current maximum available torque of the first motor, and the eighteenth torque is a current maximum available torque of the second motor.

10. The power system for the four-wheel drive battery electric vehicle according to claim 2, further comprising: a first motor control unit, a second motor control unit and a vehicle control unit;
if the clutch is arranged on the rear axle and the clutch is a one-way clutch, the first motor control unit reports a nineteenth torque according to the state of the first motor, and the second motor control unit reports a twentieth torque according to the state of the second motor;
when a pressure on a brake master cylinder is zero and an opening degree of an accelerator pedal is zero, the vehicle control unit determines a target wheel end electric creep torque according to a current vehicle speed and a target electric creep vehicle speed;
when the nineteenth torque is less than or equal to the twentieth torque, if the target wheel end electric creep torque is less than or equal to the nineteenth torque, the first motor outputs the target wheel end electric creep torque to drive the vehicle to travel, and the second motor rotates along therewith; when the nineteenth torque is less than the target wheel end electric creep torque, and the target wheel end electric creep torque is less than or equal to the twentieth torque, the second motor outputs the target wheel end electric creep torque to drive the vehicle to travel, and the first motor rotates along therewith; if the eighth torque is less than the target wheel end electric creep torque, the second motor outputs the twentieth torque, and the first motor outputs a tenth differential torque, the tenth differential torque being a differential torque between a target motor torque and the twentieth torque;
when the nineteenth torque is greater than the twentieth torque, if the target wheel end electric creep torque is less than or equal to the twentieth torque, the second motor outputs the target wheel end electric creep torque to drive the vehicle to travel, and the first motor rotates along therewith; when the twentieth torque is less than the target wheel end electric creep torque, and the target wheel end electric creep torque is less than or equal to the nineteenth torque, the first motor outputs the target wheel end electric creep torque to drive the vehicle to travel, and the second motor rotates along therewith; if the seventh torque is less than the target wheel end electric creep torque, the first motor outputs the nineteenth torque and acquires an eleventh differential torque between the target wheel end electric creep torque and the nineteenth torque, and the second motor outputs the eleventh differential torque; wherein the nineteenth torque is a current maximum available torque of the first motor, and the twentieth torque is a current maximum available torque of the second motor;
when the vehicle is driven to travel, the vehicle control unit calculates a wheel end-required driver torque according to an accelerator pedal opening degree, a brake pedal state and a vehicle speed signal;
the first motor control unit reports a twenty-first torque according to the state of the first motor, and the second motor control unit reports a twenty-second torque according to the state of the second motor;
when the wheel end-required driver torque is less than or equal to the twenty-first torque, the first motor outputs the wheel end-required driver torque, the second motor is in a static state, and the second motor does not output a torque;
when the twenty-second torque is less than the wheel end-required driver torque and the wheel end-required driver torque is less than or equal to a sum of the twenty-first torque and the twenty-second torque, a first target torque is calculated according to the wheel end-required driver torque, a front torque distribution coefficient, and a product of the speed ratio of the first transmission mechanism and the speed ratio of the first final reduction drive, the first motor outputs the first target torque; and a second target torque is calculated according to the wheel end-required driver torque, a rear torque distribution coefficient, and a product of the speed ratio of the first transmission mechanism and the speed ratio of the first final reduction drive, and the second motor outputs the second target torque, wherein the twenty-first torque is a current maximum available torque of the first motor, and the twenty-second torque is a current maximum available torque of the second motor;
the vehicle control unit calculates a wheel end-required braking torque according to a magnitude of a driver brake master cylinder pressure and an accelerator pedal state;
the first motor control unit reports a twenty-third torque according to the state of the first motor, and the second motor control unit reports a twenty-fourth torque according to the state of the second motor;
when the wheel end-required braking torque is less than or equal to the twenty-third torque, the first motor outputs a fifth target torque, the fifth target torque being a ratio of the wheel end-required braking torque to a first speed ratio product, the first speed ratio product being a product of the speed ratio of the first transmission mechanism and the speed ratio of the first final reduction drive, and the second motor neither operates nor rotates along therewith;
when the twenty-third torque is less than the wheel end-required braking torque, and the wheel end-required braking torque is less than or equal to a sum of the twenty-third torque and the twenty-fourth torque, the first motor outputs the twenty-third torque, the second motor does not work and does not rotate along therewith, and acquires a twelfth differential torque between the wheel end-required braking torque and the twenty-third torque, and a conventional mechanical hydraulic braking system outputs the twelfth differential torque;
when the wheel end-required braking torque is greater than a sum of the twenty-third torque and the twenty-fourth torque, the first motor and the second motor are in a rotation follow-up state, wherein the twenty-third torque is a current maximum available torque of the first motor, and the twenty-fourth torque is a current maximum available torque of the second motor.
